Europäisches Patentamt

European Patent Office

Office européen des brevets

(11) Publication number: **0 309 572 B1**

(19)

EUROPEAN PATENT SPECIFICATION

(12)

(45) Date of publication of patent specification: **15.06.94**  (51) Int. Cl.5: **H04Q 7/04, G08B 5/22**

(21) Application number: **88904300.6**

(22) Date of filing: **29.02.88**

(86) International application number:
**PCT/US88/00821**

(87) International publication number:
**WO 88/08238 (20.10.88 88/23)**

(54) **REGISTRATION OF RADIOTELEPHONES IN NETWORKED CELLULAR RADIOTELEPHONE SYSTEMS.**

(30) Priority: **10.04.87 US 37268**

(43) Date of publication of application:
**05.04.89 Bulletin 89/14**

(45) Publication of the grant of the patent:
**15.06.94 Bulletin 94/24**

(84) Designated Contracting States:
**AT BE CH DE FR GB IT LI LU NL SE**

(56) References cited:
**JP-A- 6 038 940**
**US-A- 4 233 473**
**US-A- 4 562 572**
**US-A- 4 658 416**
**US-A- 4 737 978**

**BRITISH TELECOMMUNICATIONS ENGINEER-
ING. vol. 4, July 1985, LONDON, GB, pages 62
-69; M.S. APPLEBY et al: "The Cellnet Cel-
lular Radio Network. Part 1-General System
Overview"**

**Commutation and Transmission, no. 2, 1985,**

**pages 39-50; J. Cueugniet et al.: "Radiocom
2000. Radiotelephone multiservice network"**

**Review of the Electrical Communication Lab-
oratories, vol. 24, nos. 11-12, November 1976,
pages 970-989; Y. Hamada et al.: "Maritime
mobile telephone switching programs"**

(73) Proprietor: **MOTOROLA, INC.**
**1303 East Algonquin Road**
**Schaumburg, IL 60196(US)**

(72) Inventor: **WILLIAMS, James, Mason**
**531 S. Craig**
**Lombard, IL 60148(US)**

(74) Representative: **Hudson, Peter David**
**MOTOROLA**
**European Intellectual Property Operations**
**Jays Close**
**Viables Industrial Estate**
**Basingstoke, Hampshire RG22 4PD (GB)**

## Description

### Cross Reference to Related Application

The instant application is a continuation-in-part of the instant assignee's copending U.S. application serial no. 925,427 (US-A-4737978, US-A-4775999), filed October 31, 1986, entitled "Networked Cellular Radiotelephone Systems", invented by Michael Burke et al., and incorporated herein by reference.

### Background of the Invention

The present invention generally relates to radiotelephone communication systems such as that of British Telecommunications Engineering Vol.4 July 1985, London GB, pages 62-69 and more specifically to a method for registration of radiotelephones in networked cellular radiotelephone systems each covering adjacent geographical areas.

Radiotelephone service has been in use for some time and traditionally has been characterized by a central site transmitting by way of high-power transmitters to a limited number of mobile or portable radiotelephones in a large geographic area. To avoid repetition, the word "mobile" and "mobiles" will be used hereinafter to mean mobile or portable radiotelephones. Mobile transmissions, due to their lower power transmitters, were generally received in previous systems by a network of satellite receivers remotely located from the central site for receiving and relaying mobile transmissions to the central site for processing. In previous systems only a limited number of radio channels were available, thus limiting the number of radiotelephone conversations in an entire city to the specific number of available channels.

Modern cellular radiotelephone systems have a comparatively large number of radio channels available which, further, can be effectively multiplied by reuse of the radio channels in a metropolitan area, such as the metropolitan area of a large city like Chicago or New York, by dividing the radio coverage area into smaller coverage areas called cells using low power transmitters and coverage restricted receivers. Such cellular systems are further described in U.S. Patent Nos. 3,906,166 and 4,268,722. The limited coverage area enables the radio channels used in one cell to be reused in another cell geographically separated according to a predetermined plan, such as a four cell pattern shown and described in U.S. patent no. 4,128,740. In this four cell pattern, each cell is assigned a subset of the available radio channels and reuse of the radio channels is accomplished by repeating the pattern throughout a metropolitan area.

A cell system typically utilizes a pair of radio frequencies for each radio channel in each cell. Each cell is assigned at least one paging/access channel and several voice channels. The paging/access channel is dedicated to controlling the operation of the mobiles by means of data messages transmitted to and received from the mobiles. Control functions performed include paging selected mobiles, receiving requests for service from mobiles, instructing mobiles to tune to a voice channel where a conversation may take place, identifying the particular cellular system to the mobiles and enabling mobile registration by which process the mobiles identify themselves to the system. The data message and radio channel specifications for U.S. cellular radiotelephone systems are set forth in Electronic Industries Association (EIA) Interim Standard IS-3-C implemented in accordance with 47 CFR 22 and the Report and Orders pertaining to Federal Communications Commission Docket 79-318. Copies of EIA Interim Standard IS-3-C may be obtained from the Engineering Department of the Electronic Industries Association at 2001 Eye Street, N.W., Washington, D.C. U.S.A. 20006.

Since the cells may be of relatively small size, the likelihood of a mobile travelling out of one cell and into another cell is high. The process of switching the established call from one cell, the source cell, to another, the target cell, is known as handoff. The cellular system determines the need for a handoff by periodically measuring the signal strength of each active mobile. If the measured signal strength is below a predetermined level, the cellular system determines the availability of other channels in neighboring target cells and composes an instruction to the mobile commanding it to tune to an available channel in an acceptable target cell. As more cellular systems are installed, handoffs between different cellular systems may take place in order to maintain a call as the mobile passes from the coverage area of one cellular system to another.

Since mobiles may quickly move between cells and adjacent cellular systems, terminating a call to a particular mobile may necessitate paging that mobile in all cells of the particular cellular system where the mobile is currently located. Mobile location information may be obtained by requiring that each mobile register frequently with its cellular system. However, frequent updating of each mobile's location will divert processing capacity of its cellular system from call processing to registration processing, thereby reducing the number of calls that may be processed and adversely impacting revenues. Accordingly, there is a need for an improved method for registration of radiotelephones in networked cellular systems in order to optimize call processing capacity and revenues of the networked cellular systems.

## Summary of the Invention

Therefore, it is an object of the present invention to provide an improved method for registration of radiotelephones in networked cellular radiotelephone systems each covering adjacent geographical areas.

Briefly described, the present invention encompasses an improved method of controlling registration of radiotelephones in large and networked cellular radiotelephone systems. Each radiotelephone system has a plurality of cells for providing radiotelephone service to a corresponding geographical area, each cell has paging/access and voice channels and a radio coverage area established by fixed site radios, and each radiotelephone is capable of transmitting a registration message in response to a registration enabling message transmitted on the paging/access channels by the fixed site radios. The unique method comprises the steps of: assigning the same system identification number to all of the radiotelephone systems; establishing the same re-registration parameters for all radiotelephone systems such that the re-registration period is long relative to the mean time between call attempts for radiotelephones; assigning groups of cells to different paging areas; assigning an offset number to each paging area, different from that assigned to any adjacent paging area, where offset numbers are selected from a predetermined range of numbers; generating a registration identification number for each paging area derived from the corresponding assigned offset number; periodically transmitting on the paging/access channels from the fixed site radios in each cell a registration enabling message containing the corresponding registration identification number for the paging area in which the cell is located; and transmitting a registration message from a radiotelephone when the received registration identification number differs from a previously received registration number by a predetermined amount.

## Brief Description of the Drawings

Figure 1 is a block diagram of three networked cellular systems showing their respective coverage areas, paging areas and illustrative border cells.

Figure 2 is a block diagram of the equipment which would be employed in a conventional cellular system having center-illuminated sector cells.

Figure 3 is a block diagram of the control terminal in Figure 2.

Figure 4 is a block diagram of the base sites in Figure 2.

Figure 5 is a flow diagram executed by a mobile for receiving or initiating calls in a cellular system networked with at least one other cellular system.

Figure 6 is a flow diagram executed by a mobile for scanning the paging/access channels in a cellular system networked with at least one other cellular system.

Figure 7 is a flow diagram executed by the control terminal in Figure 2 for processing a mobile originated call in a cellular system networked with at least one other cellular system.

Figure 8 is a flow diagram executed by the control terminal in Figure 2 for processing a land originated call in a cellular system networked with at least one other cellular system.

Figure 9 is a flow chart executed by the control terminal in Figure 2 for periodically updating registration parameters in each paging area of the cellular system.

Figures 10A and 10B are a flow charts executed by each base site in Figure 2 for periodically updating registration parameters.

Figure 11 is a diagram of the overhead message train (OMT).

Figure 12 is a diagram of a portion of the mobile memory.

Figure 13 is a diagram of the directed re-try message.

## Detailed Description of the Preferred Embodiment

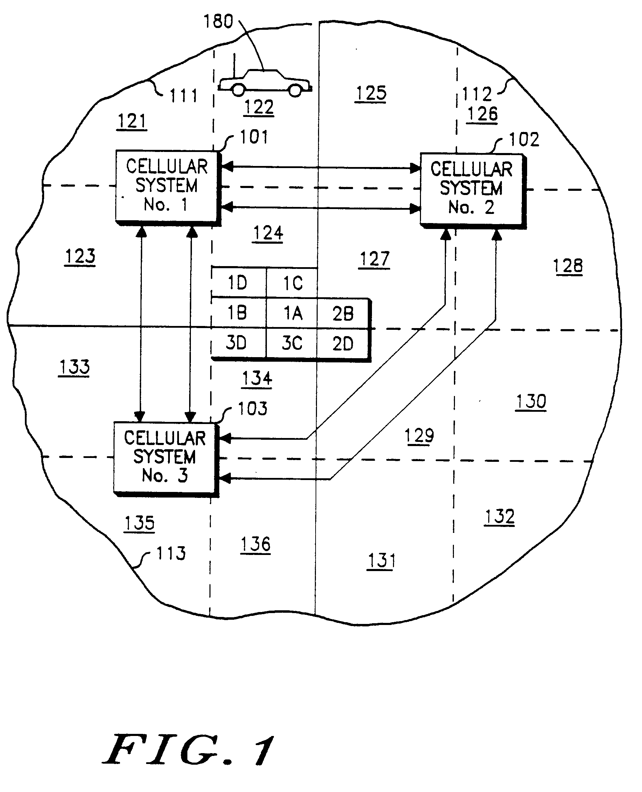

In Figure 1, there is illustrated three networked cellular systems 101-103, each having a corresponding coverage area 111-113, paging areas 121-124, 125-132 and 133-136 and illustrative border cells 1A, 2B and 2D, and 3C, respectively. Cellular systems 101-103 may be owned by one entity or different entities. Each system 101-103 is coupled to the other by a network of data and voice lines for communicating data messages and interconnecting intersystem telephone calls, respectively. This network of data and voice lines may be implemented by dedicated lines or may be routed through the existing landline telephone network. Whenever mobiles, e.g. cellular mobile 180, pass between paging areas, such as, for example, paging areas 122 and 121, mobile 180 must automatically register in the new paging area 122. Mobile 180 also re-registers in paging area 122 if it remains there without making or receiving any calls, for a predetermined time interval since it last registered there. By utilizing the present invention, mobile registrations are minimized, thereby maximizing call processing capacity of the cellular systems 101-103 and the call revenues of the cellular system operators.

According to the present invention, paging of a mobile need not be made throughout the coverage area 111-113 of the networked cellular systems 101-103 in Figure 1, but instead need only be made to a single paging area 121-136 including a group of cells from one or more of the networked cellular systems 101-103. By using paging areas 121-136, the network of cellular systems 101-103 can continue to grow independently of signalling limitations on the paging/access channel.

A paging area 121-136 consists of a number of contiguous cells, e.g. 1A-1D in paging area 124 and 3C and 3D in paging area 134, chosen such that the number of subscribers expected to be served in the paging area does not exceed that which would produce a predetermined nominal paging rate. The cells comprising a paging area 121-136 may all be connected to a single cellular system or may be distributed among several. Conversely, the cells controlled by a single cellular system 101-103 may all be part of one paging area or may be distributed among more than one. Mobile registration procedures are used to track the movements of every mobile among the paging areas 121-136 while not presenting an undue processing burden on any of the control terminals 420 of each cellular system 101-103. Pages are then "steered" to the cellular system 101-103 controlling the paging area 121-136 where the mobile is located at the time of its most recent registration.

Mobile registration is the process by which a mobile unit becomes listed as being present in the service area of one of the networked cellular systems 101-103 in Figure 1. In the United States, mobile registration procedures are specified by the provisions of EIA Interim Standard IS-3-C, dated June 1986. Copies of EIA Interim Standard IS-3-C may be obtained from the Engineering Department of the Electronic Industries Association at 2001 Eye Street, N.W., Washington, D.C. U.S.A. 20006.

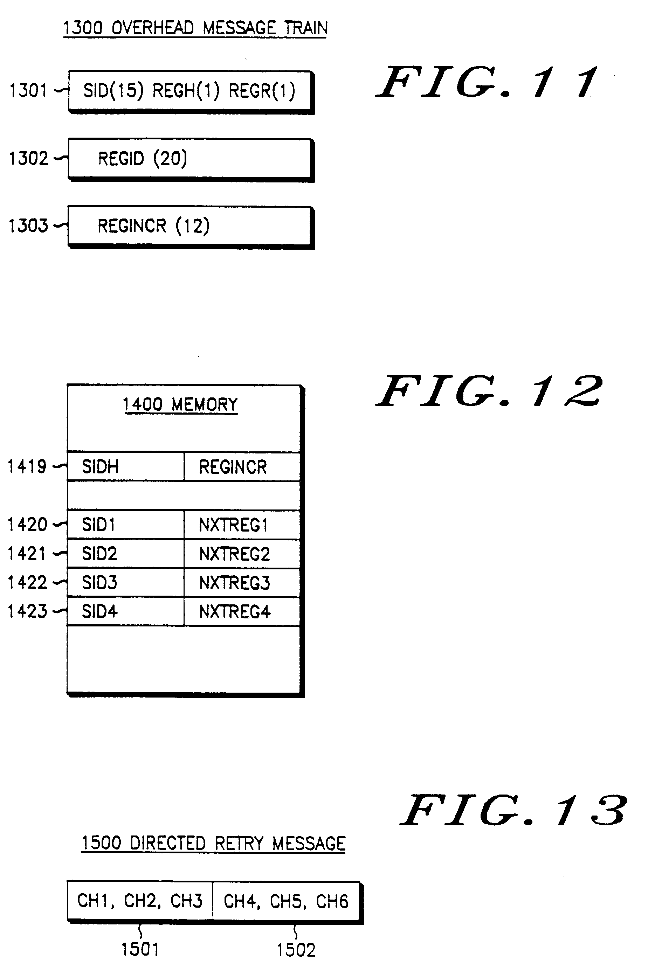

The purpose of mobile registration is to permit calls to a mobile to be automatically delivered, even though the mobile may be moving from place to place through a cellular system. Mobile registration according to EIA Interim Standard IS-3-C is effected by means of an interaction between a cellular system and the mobiles operating in its service area. This interaction is called "autonomous registration" and is controlled by the cellular system through certain information transmitted to the mobiles in the form of an "overhead message train" (OMT). Referring to Figure 11, the OMT 1300 is transmitted on paging/access channels throughout the cellular system service area, nominally once each second, and includes a system parameter overhead message 1301 containing SID, REGH and REGR plus, and optionally, several other messages of which the registration ID message 1302, containing REGID, and the registration increment message 1303, containing REGINCR are relevant to the autonomous registration process.

Registration may be enabled or disabled individually for each class of mobile, e.g. home or roam, by means of control bits REGH and REGR in the system parameter overhead message 1301. This message 1301 also contains the identification SID of the serving cellular system from which the mobile determines whether it is a "home" or a "roam" mobile. Each mobile contains, in its internal memory 1400 shown in Figure 12, an entry 1419 indicating the identity of its home cellular system SIDH and entries 1420-1423 indicating up to four cellular systems (which may include the home cellular system) SID1-SID4 in which it most recently registered successfully, along with a value NXTREG for each cellular system used to determine when it is scheduled to re-register in that cellular system.

Cellular system access for registration purposes may occur only in response to a registration ID message 1302 which may be included periodically in the OMT. The registration ID message 1302 contains a field, REGID, which may be incremented regularly by each base site of cellular systems 101-103. A particular mobile will respond to a specific registration ID message 1302 if both registration is enabled and either the mobile is not currently registered in the system (SID is not one of the four entries in the mobile's internal memory), or the value of the REGID 1302 exceeds the value of the NXTREG variable associated with a SID in the mobile's registration memory 1400, or the value of the REGID 1302 is less than NXTREG-REGINCR-5. Each time a mobile registers in a cellular system it updates the NXTREG value 1419-1423 for that cellular system by adding the last received value of REGINCR 1303 to the last received value of REGID 1302. The mobile also updates NXTREG 1419-1423 for each call origination or page response.

Note that the values of REGID 1302, REGINCR 1303 and NXTREG 1419-1423 are used to control registrations in each cellular system 101-103 individually. In large cellular systems and networked cellular systems 101-103, it is not desirable for mobiles to register frequently, since updating the mobile's service area location in the cellular system's data base can reduce call processing capacity if performed too often. On the other hand, if the interval between registrations is lengthened to avoid burdening the cellular systems 101-103 with unnecessary processing of registration messages, then it is likely that mobiles will become "lost" in the sense that the cellular systems 101-103 don't know in which of the cellular systems of latest registration the mobile is actually located. This means that automatic call delivery for roaming mobiles may not work reliably, or that cellular systems will have their call processing capacity reduced because of the burden of processing frequent registration messages and/or complex searching schemes.

For the foregoing reasons, the mobile registration provisions of EIA Interim Standard IS-3-C are not very well suited to the objective of fully automatic call delivery to mobiles operating in large and/or networked cellular systems 101-103. By utilizing the present invention, each mobile registers automatically only when it moves from one paging area to another, e.g., from paging area 122 to 121. As a result, the registration burden seen by cellular systems 101-103 is held to the absolute minimum level consistent with the fast and accurate tracking of mobile location required for reliable and efficient call delivery.

Careful examination of the re-registration algorithm specified by EIA Interim Standard IS-3-C shows that a mobile will register in a cellular system when the value of the REGID parameter received in a registration ID message 1302 meets either of the following conditions:

REGID ≥ NXTREG; or
REGID ≤ (NXTREG - REGINCR - 5).

According to the present invention, by causing the value of REGID 1302 being transmitted in each paging area, e.g., 121 in Figure 1, to be different from that found concurrently in any of the surrounding paging areas 122-136 by an amount at least somewhat greater than REGINCR 1303, and permanently maintaining this offset, then mobiles will register each time they move from one paging area to another. In the preferred embodiment of the present invention, REGINCR, a 12-bit parameter, has a maximum value of 4095, while REGID, a 20-bit parameter, is incremented cyclically from 0 to 1,048,575. If the number 4196, for example, is chosen as the minimum offset in REGID for adjacent paging areas 121-136, then there can be 250 different paging areas 121-136 in the coverage areas 111-113 of cellular systems 101-103 without any two having the same REGID. Accordingly, each paging area 121-136 throughout the coverage areas 111-113 may be assigned an integer number between 0 and 249, called the paging area offset (PAOFF), such that the same value of PAOFF is never used in two paging areas that are near to one another. In the case of the mobiles, only one pair of SID/NXTREG values 1420-1423 is relevant to its registration status in any of the paging areas 121-124, 125-132 and 133-136 since all systems are identified by the same SID.

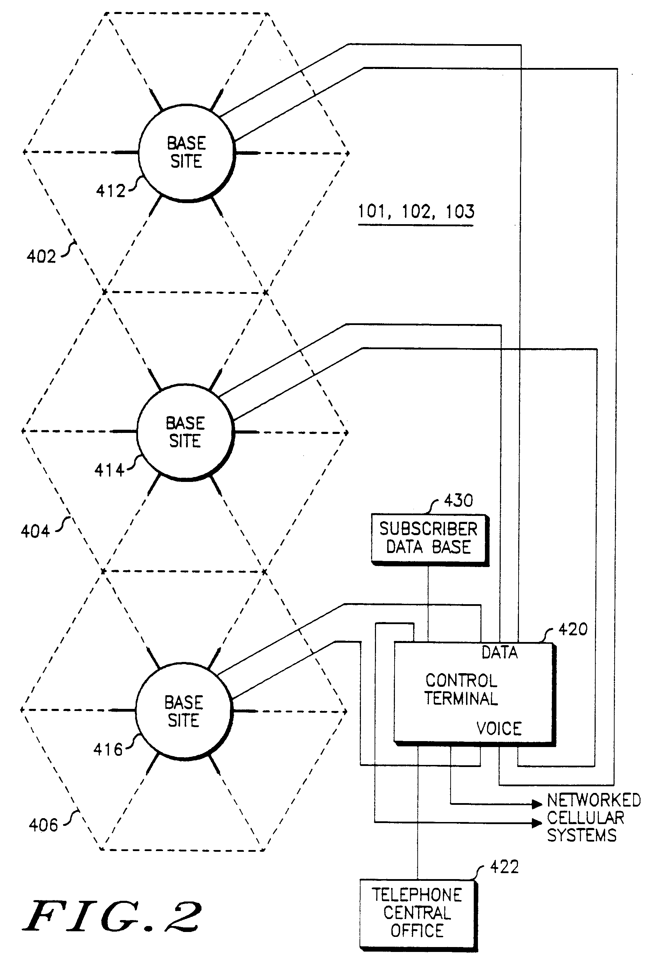

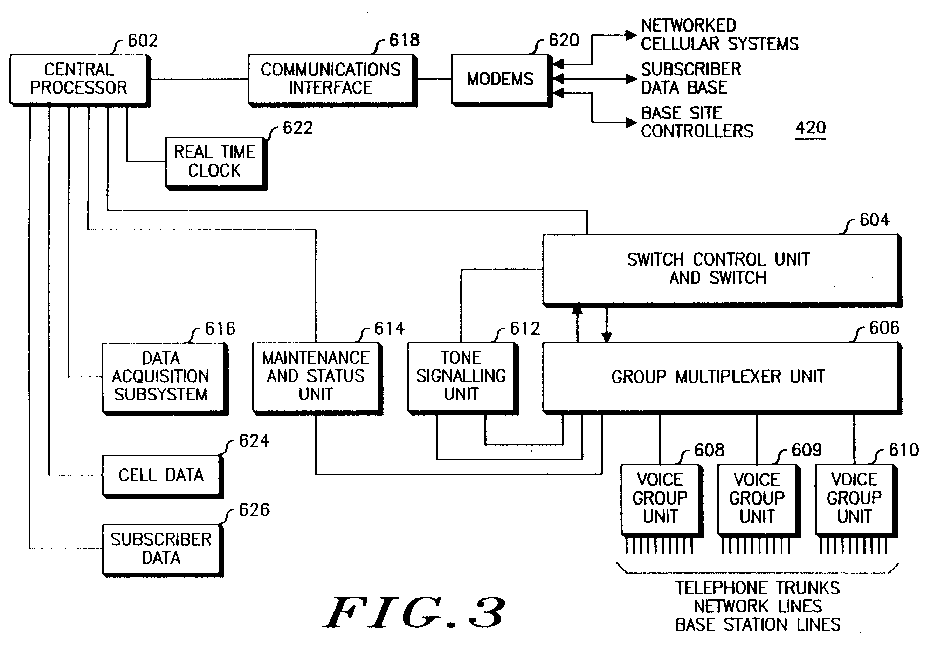

Each control terminal 420 in Figure 3 is equipped with a redundant real-time clock 622 that is used for time stamping call records and other system outputs. In the preferred embodiment, the output of the real-time clock 622 has a resolution of one second or less. The 20 bits of the real-time clock 622 output that represents the current time to a resolution of one second is the value of REGID that should currently be transmitted in a paging area with a PAOFF number equal to zero. For other values of PAOFF, this is added to (PAOFF * 4196) to produce the correct REGID. If this result is greater than $(2^{20} - 1)$, it must be reduced by $2^{20}$. This value should be computed and down-loaded to the base sites 412, 414 and 416 in figure 2 of all cells of the paging areas 121-136 each time the real-time clock 622 is re-set, or when defining new paging areas or re-defining old ones, and at regular but infrequent intervals (such as, for example, once every 24 hours) to compensate for the slow drift of the clocks used at the base sites to time transmission of OMTs. If the real-time clock 622 is re-set due to daylight saving time or other "artificial" reasons, this should also be compensated for when computing each REGID.

REGID messages 1302, which cause mobiles to access the cellular systems 101-103 for registration purposes are transmitted as part of the OMT which has a nominal periodicity of one second. If REGID 1302 is included in every Nth OMT, then a mobile will register within N seconds of acquiring a paging/access channel in a new paging area 121-136. For mobiles which remain indefinitely in a single paging area, e.g. paging area 122, each call origination or page response is treated as being equivalent to a registration. If the interval between registrations is established to be significantly longer than the average time between calls, then mobiles will very rarely access the system solely for registration purposes except when moving between paging areas 121-136. Setting REGINCR to its maximum value of 4095 and the interval at which the REGID value is advanced by one count to, for example, 21 seconds will produce a re-registration interval of:

21 * 4095 / 3600 = 23.89 hours

which will satisfy the requirement of minimizing registration accesses.

According to EIA Interim Standard IS-3-C, when a mobile's registration access attempt fails (i.e., no confirmation response received by the mobile from the system), it will generate a random number NRANDOM which is uniformly distributed between 1 and 10, and schedule itself to try again by setting NXTREG equal to:

NXTREG = REGID + NRANDOM

For this reason, cellular systems supporting EIA Interim Standard IS-3-C must advance REGID at periodic intervals or mobiles will occasionally become "lost" until such time as they originate a call or move from one paging area to another.

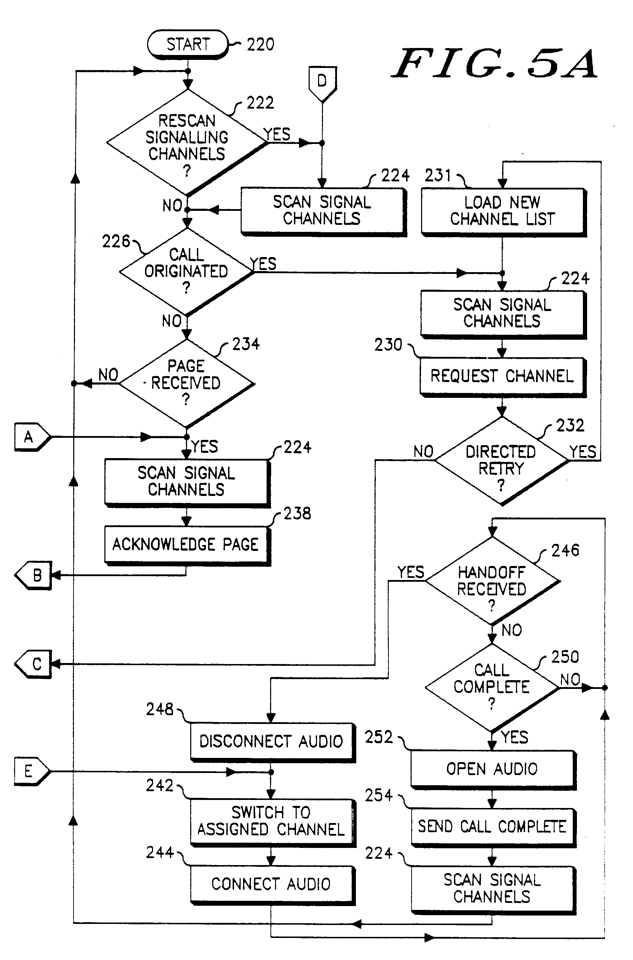

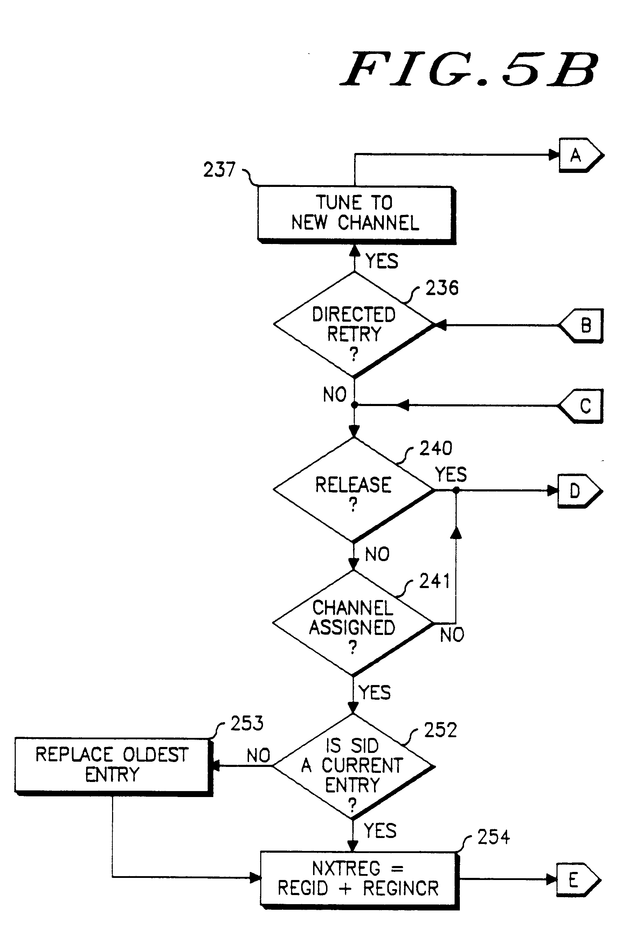

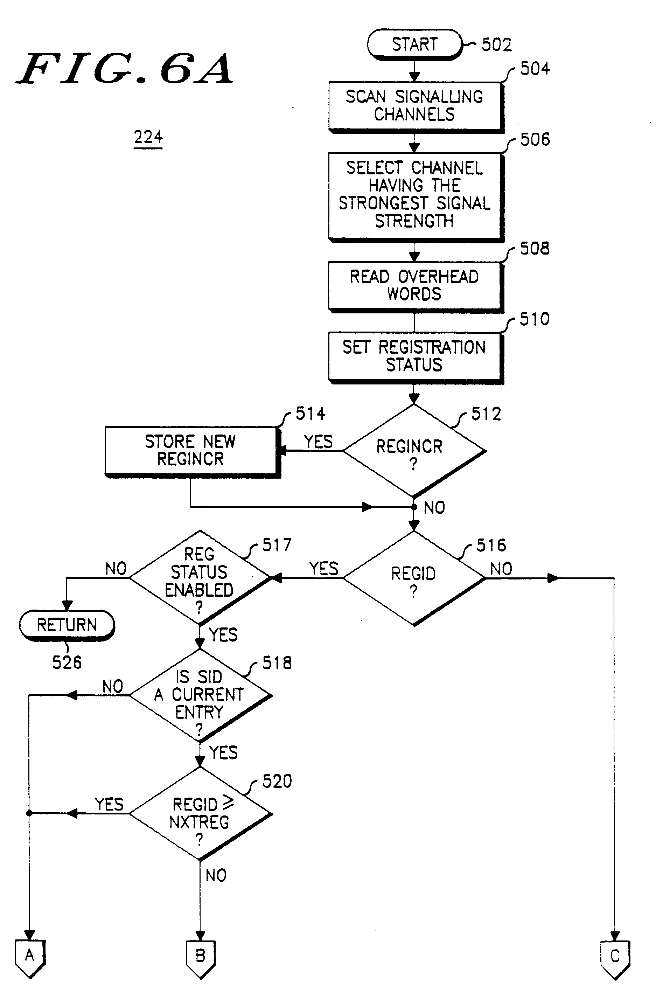

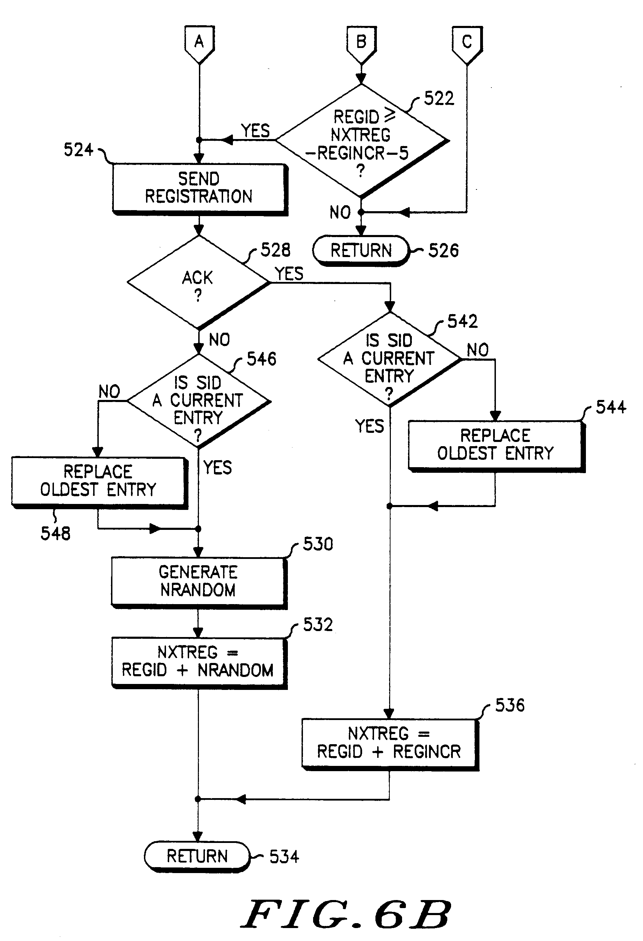

When in the idle mode, a mobile continually monitors one of the paging/access channels in cellular systems 101-103. It selects the particular paging/access channel to monitor by "scanning" a list of such channels designated by the cellular systems 101-103 in the OMT and choosing the strongest (see Figures 5 and 6). As illustrated in Figure 5, a mobile will re-scan the paging/access channels under the following conditions: (1) every five minutes; (2) whenever the signal strength of the present channel becomes so weak that messages cannot be decoded correctly; (3) at the end of every call; and (4) at the beginning of every system access.

When a mobile 180 in Figure 1 which is operating along the border between adjacent cellular systems 101 and 102 receives a page from paging area 122, it will perform a re-scan according to condition number (4) above. Since mobile 180 is on the border between adjacent cellular systems 101 and 102, the probability is fairly high that the newly selected paging/access channel will be from a paging area 125 of cellular system 102. Cellular system 102 will be unable to process the page response since it did not issue the page and has no knowledge of the call origination. This "abnormal" page response situation will be common in networked cellular systems with multiple paging areas.

According to another feature of the present invention, the directed re-try facility of EIA Interim Standard IS-3-C is used to direct the mobile back to paging cellular system 101. Directed re-try is a message 1500 shown in Figure 13 which designates up to six alternative access channels from which the mobile may select to re-attempt its system access. Directed retry is presently used when no voice channels are available at a cell site to direct a mobile station, under appropriate signal strength conditions, to a neighboring cell where voice channels may be available. To accommodate the "abnormal" page response situation described above, the directed re-try list for the border cells of each paging area 121-136 must be segmented into two parts 1501 and 1502. The first part 1501 includes access channels of neighboring cells which are part of the same paging area and is used for "normal" page responses, i.e., when the page was sent from the cell responded to, but when no channels are available. The second part 1502 includes access channels of those neighboring border cells that are part of the neighboring cellular system, and is used for "abnormal" page responses to direct the mobile back to a cell in the cellular system that paged it. For example, in the case of paging area 125, the first part 1501 includes access channels of cells in paging area 125 and the second part 1502 includes access channels of cells in paging area 122. The full directed re-try list, specifying access channels for up to six neighboring cells, is used for mobile originations when no voice channels are available.

Referring now to Figure 2, there is illustrated a block diagram of cellular systems 101-103 in Figure 1. Such cellular systems 101-103 are further described in U.S. Pat. Nos. 3,906,166 and 4,268,722 each assigned to the assignee of the present invention and incorporated herein by reference and in an experimental cellular radiotelephone system application filed under FCC Docket No. 18262 with the Federal Communications Commission by Motorola and American Radio-Telephone Service, Inc., in Feb. 1977. Such cellular systems provide telephone coverage to cellular mobiles located throughout a large geographical area. Mobiles may be cellular radiotelephones of the type described in in U.S. Pat. Nos. 4,486,624, 3,962,553 and 3,906,166 each assigned to the assignee of the present invention and incorporated herein by reference, and in Motorola instruction manual number 68P81039E25, published by Motorola Service Publications, Schaumburg, Illinois, in 1979. Mobiles are commercially available in the U.S. from a number of cellular radiotelephone suppliers. Although Figure 2 shows three center-illuminated sector cells, it is obvious that a person skilled in the art may be able to apply the essence of the present invention to other types of cellular configurations such as, for example, omnidirectional-illuminated or corner-illuminated cellular configurations.

As illustrated in Figure 2, the geographical area is subdivided into cells 402, 404, and 406 which are illuminated with radio frequency energy from base sites 412, 414 and 416. Each base site 412, 414 and 416 is coupled by data and voice lines to a radiotelephone control terminal 420 which may be similar to the terminals described in aforementioned U.S. Patent Nos. 3,906,166 and 4,268,722. These data and voice lines may be provided by dedicated wire lines, pulse code modulated carrier lines, microwave radio channels, or other suitable communication links. Control terminal 420 is, in turn, coupled to the existing telephone network via a conventional telephone central office 422 for completing telephone calls between mobiles and landline telephones.

A functional block diagram of a typical control terminal 420 is shown in Figure 3. This control terminal may be an EMX 100 available from Motorola, Inc. or any other suitable commercially available equivalent. Basically, the control terminal consists of a central processor 602, a switch control unit and switch 604, group multiplexer unit 606, voice group units 608-610, tone signalling unit 612, maintenance and status unit 614, data acquisition subsystem 616, communications interface 618, modems 620, real-time clock 622, cell data base 624 and subscriber data base 626. Cell data base 624 includes data identifying border cells, adjacent cells and lists of paging/access channels for directed retrys. Subscriber data base 626 includes data identifying valid subscriber identification numbers and other subscriber related information. Communications over the data lines to each base site, networked cellular system and remote subscriber data base may be accomplished via conventional modems 620, and any conventional communications protocol such as Advanced Data Communications Control Procedures (ADCCP).

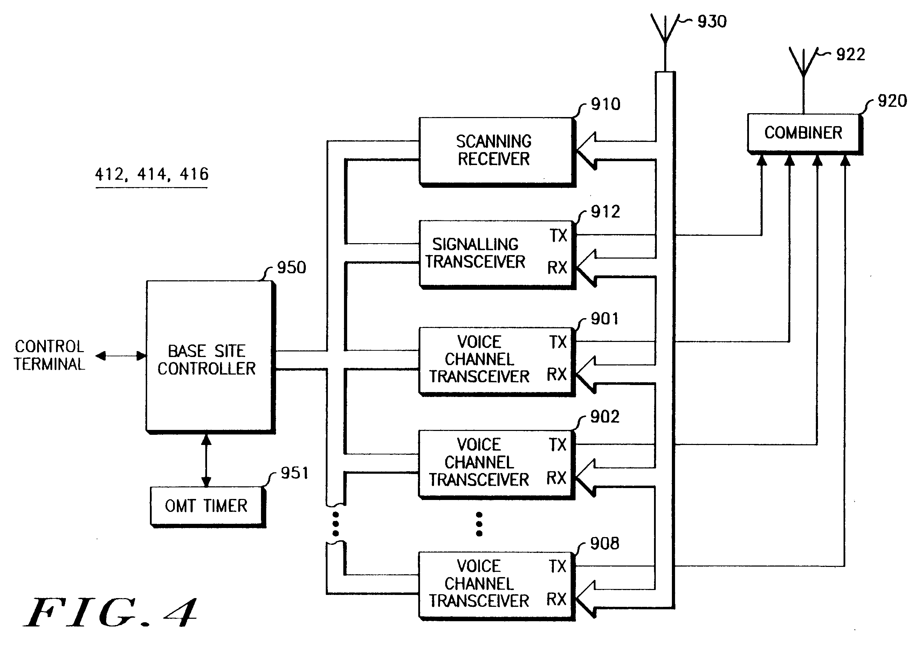

The interconnection between control terminal 420 and the base sites 402, 404 and 406 is further shown in Figure 4. The interconnection may be on a line per channel basis or a pulse-code-modulation (PCM) group basis. Either type of interconnection is well known in the art. A separate data line, such as, for example, a standard telephone line or other communications link capable of carrying high-speed data, is extended between the control terminal 420 and each base site 402, 404 and 406.

Referring to Figure 4, each of the base site 412, 414, and 416 includes a base site controller (BSC) 950, an OMT timer 951, a scanning receiver 910, a signalling transceiver 912 for operating on at least one duplex paging/access channel, a plurality of voice channel transceivers 901-908 for operating on corresponding duplex voice channels, receiving antennas 930 and transmitter combiner 920 and transmitter antenna 922. Voice channel transceivers 901-908 may be located substantially at the center of each of the corresponding cells 402, 404, and 406. The transmitters of signalling transceiver 912 and voice channel transceivers 901-908 may be combined by conventional combiner 920 onto one omni-directional antenna 922, while the signalling receiver 912 and receivers of voice channel transceivers 901-908 and scanning transceiver 910 may be selectively intercoupled to two or more directional or omni-directional antennas 930. Alternatively, in other conventional embodiments, each transmitter of signalling transceiver 912 and voice channel transceivers 901-908 may also be coupled to two or more directional antennas. The base site equipment in Figure 4 and its operation is described in further detail in the instant assignees copending patent application serial no. 829,872 (US-A-4704734), filed February 18, 1986, entitled "Method and Apparatus for Signal Strength Measurement and Antenna Selection in Cellular Radiotelephone Systems", invented by Barry J. Menich et al. and incorporated herein by reference. Furthermore, the base site equipment illustrated in Figure 4 is commercially available from Motorola, Inc. and employs transceivers of the type described in Motorola Instruction Manual No. 68P81060E30, published by Motorola Service Publications, Schaumburg, Illinois, in 1982.

In Figure 4, antennas 930 may be implemented with six 60° sector antennas. Each sector antenna 930 primarily covers a portion of a cell as shown in dashed lines in Figure 2 and typically has a coverage area that overlaps the coverage area of adjacent sector antennas. Since the paging/access channel generally requires an omni-directional receiving pattern, the signals received by the six sector antennas 930 may be combined in signalling transceiver 912 by means of a maximal ratio predetection diversity combiner, as illustrated and described in U.S. Patent Nos. 4,369,520 and 4,519,096 each assigned to the assignee of the present invention and incorporated herein by reference. Furthermore, signalling transceiver 912 may provide coverage of a portion of a cell by selectively combining the signals received by two or more of the sector antennas 930. The sector antennas 930 and associated receiving apparatus may be of the type shown and described in U.S. Patent Nos. 4,101,836 and 4,317,229 each assigned to the assignee of the present invention and incorporated herein by reference.

Because the voice channel transceivers 901-908 of the preferred embodiment may be selectively programmed to any radio channel, each transceiver 901-908 may be used interchangeably as a scanning receiver, voice channel transceiver, or paging/access channel receiver. This fact allows BSC 950 to be relieved of the task of making and controlling the process of signal strength measurement and supervisory audio tone detection thereby making possible the use of available voice channel transceivers 901-908 as scanning receivers when a handoff measurement request (HOMRI) is received from control terminal 420. The available transceiver 901-908 takes cell site characteristics that are downloaded from BSC 950. The downloaded information is the cell type in which the available transceiver 901-908 is being operated (eg., omni or sector) and what kind of function it is to perform in the system (eg., voice channel transceiver, scanning receiver, or paging/access transceiver). Also, the available transceiver 901-908 used for scanning is capable of queueing several handoff measurement requests, executing them, and queueing the results for later processing by BSC 950.

Handoff measurement requests (HOMRI) that come from a source BSC to a target BSC are queued automatically and are run as soon as possible. The only reason that a handoff measurement request (HOMRI) would not run immediately is that it would have to wait for a current handoff request to finish execution. Included within the handoff measurement request (HOMRI) are the source signal strength, an optional signal strength offset, the source voice channel frequency and the source supervisory audio tone frequency. When the handoff measurement is run, target BSC compares the source BSC signal strength plus the optional signal strength offset to its measured signal strength and provides a response (HOMRS) if the measured signal strength is greater than the source BSC signal strength plus the optional signal strength offset. Included within the handoff measurement response (HOMRS) is the signal strength measured by target BSC. Otherwise, target BSC does not respond. The handoff measurement task run by target BSC is described in further detail in the aforementioned patent application serial no. 829,872 (US-A-4704734), in the aforementioned patent application serial no. 925,427, and in U.S. patent no. 4,485,486, all incorporated herein by reference.

Referring to Figure 5, there is illustrated a flow diagram executed by mobiles for receiving or initiating calls in a networked cellular system. The process in Figure 5 is entered at START block 220 when the mobile is turned on. At decision block 222, turn on is detected and YES branch is taken to block 224 where the mobile scans a predesignated group of twenty-one paging/access channels.

The mobile scanning process is shown in further detail in Figure 6. Entering a START block 502 to block 504, a pre-selected group of the twenty-one paging/access channels are scanned. Next, at block 506, the mobile selects the paging/access channel in the pre-selected group which has the strongest signal strength. The mobile then tunes to the selected paging/access channel. At block 508, the mobile reads the overhead words on the selected paging/access channel.

Next, at block 510 in Figure 6, the registration status is recorded. Then, at decision block 512, a check is made to determine of REGINCR has been received. If so, YES branch is taken to block 514 where the new value of REGINCR is stored in the mobile's memory. Otherwise, NO branch is taken to decision block 516, where a check is made to determine if REGID has been received. If not, NO branch is taken to block 526 to return to the flow diagram of Figure 5. If REGID has been received, YES branch is taken to decision block 517 to determine if registration status has been enabled. If not, NO branch is taken to block 526 to return to the flow diagram of Figure 5. If registration status has been enabled, YES branch is taken from decision block 517 to decision block 518 to determine if the received SID is included among the four entries (1420-1423 in Figure 12) indicating the systems of most recent registration. If the received SID is not so included, NO branch is taken to block 524 to send a registration message.

If received SID is among the current entries in the mobile's memory, YES branch is taken to decision block 520 in Figure 6 to determine if REGID ≥ NXTREG. If so, YES branch is taken to block 524 to send a registration message. If not, NO branch is taken from decision block 520 to decision block 522 to determine if REGID ≤ NXTREG-REGINCR-5. If not, NO branch is taken to block 526 to return to the flow diagram of Figure 5. If REGID ≤ NXTREG-REGINCR-5, YES branch is taken from decision block 522 to block 524 where a registration message is sent.

Proceeding from block 524, the mobile checks for an acknowledgement message at decision block 528 indicating that the cellular system received the registration message. If an acknowledgement message has been received, YES branch is taken from decision block 528 to decision block 542 to determine if the SID is among the current entries in the mobile's memory. If not, NO branch is taken to block 544 to replace the oldest entry 1420-1423 with the new SID. If the SID is a current entry, YES branch is taken to block 536 where NXTREG is updated by adding REGINCR to REGID and then stored in the mobile's memory. Thereafter the mobile returns at block 534 to the flow diagram of Figure 5. If an acknowledgement message is not received, NO branch is taken from decision block 528 to decision block 546 to determine if the SID is among the current entries in the mobile's memory. If not, NO branch is taken to block 548 to replace the oldest entry 1420-1423 with the new SID. If the SID is a current entry, YES branch is taken to block 530 to generate a random number NRANDOM. According to EIA Interim Standard IS-3-C, NRANDOM is a random number between 1 and 10. Then at block 532, NXTREG is updated by adding NRANDOM to REGID and then stored in the mobile's memory. As a result, the mobile will attempt to register again after a relatively short random time interval. Thereafter the mobile returns at block 534 to the flow diagram of Figure 5.

Returning to decision block 226 in Figure 5, a check is made to see if a call is being originated by the mobile subscriber. If not, NO branch is taken to decision block 234, where a check is made to determine if a paging message or "page" has been received on the selected paging channel. If not, NO branch is taken back to decision block 222 to determine if it is time to scan the paging and access channels again. Periodically, the mobile will repeat the scan of the paging and access channels to insure that it is monitoring the strongest paging channel. Once a paging channel has been selected, the mobile has selected the cell in which it is operating.

Returning to decision block 234 in Figure 5, if a page has been received, YES branch is taken to block 224 where the paging/access channels are scanned before acknowledging the page. A page is a data message that informs the mobile that someone is attempting to call the mobile. Then, at block 238, the page is acknowledged on the selected paging/access channel. Next, a check is made at decision block 236 to determine if a directed retry message has been received on the selected paging/access channel. If so, YES branch is taken back to block 237, to tune to the directed access channel. Then, at block 238, the page is acknowledged on the directed access channel.

Returning to decision block 226 in Figure 5, if a call has been originated, YES branch is taken to block 224 where the paging/access channels are scanned before requesting a voice channel. Then, at block 230, a message is sent on the selected paging/access channel requesting a voice channel assignment. Next, at decision block 232, a check is made to determine if a directed retry message has been received on the selected paging/access channel. If so, YES branch is taken back to block 231, to tune to the directed access channel. Then, at block 230, another message is sent on the directed access channel requesting a voice channel assignment.

Both the call originated path and the page received path join at block 240 where a check is made to see if a release has been received. If so, YES branch is taken to return to block 224. Otherwise, NO branch is taken to decision block 241 to check if a voice channel assignment has been received. If not, NO branch is taken to return to block 224. If a voice channel has been assigned, YES branch is taken to decision block 252 to check to determine if the last received SID is among the current entries in the mobile's memory. If not, NO branch is taken to block 253 where the oldest entry is replaced by the new SID. If the received SID is a current entry, YES branch is taken from decision block 252 to block 254 where NXTREG is updated by adding REGINCR to REGID and then stored in the mobile's memory. Next, at block 242, the mobile tunes its transmitter and receiver to the assigned voice channel and sends a burst of signalling tone (10 Khz) to inform the BSC of its arrival arrival on the voice channel. Audio is connected at block 244 and the call is completed in a similar manner to a conventional landline call.

Next, at decision block 246, a check is made to determine if a handoff has been received. A handoff is a data message informing the mobile to switch to a new voice channel. If a handoff has been received, YES branch is taken to block 248 where the audio path is disconnected. Blocks 242 and 244 are then repeated. When leaving the old voice channel the mobile sends a burst of signalling tone to the old BSC. The old (source) BSC detects the burst of signalling tone and sends source clear message (SC) to the cellular system control terminal 420. The mobile retunes its transmitter and receiver to the new voice channel and transponds the supervisory audio tone. The new BSC detects the supervisory audio tone from the mobile and sends a handoff complete message (HOC) to the cellular system control terminal 420. If a handoff has not been received, NO branch is taken to decision block 250 where a check is made to determine if the call has been completed. If not, NO branch is taken back to decision block 246. If the call has been completed, YES branch is taken to block 252 where the audio path is disconnected. Then, at block 254, a call complete signal is sent, and at block 224, the paging/access channels are scanned before returning to decision block 222.

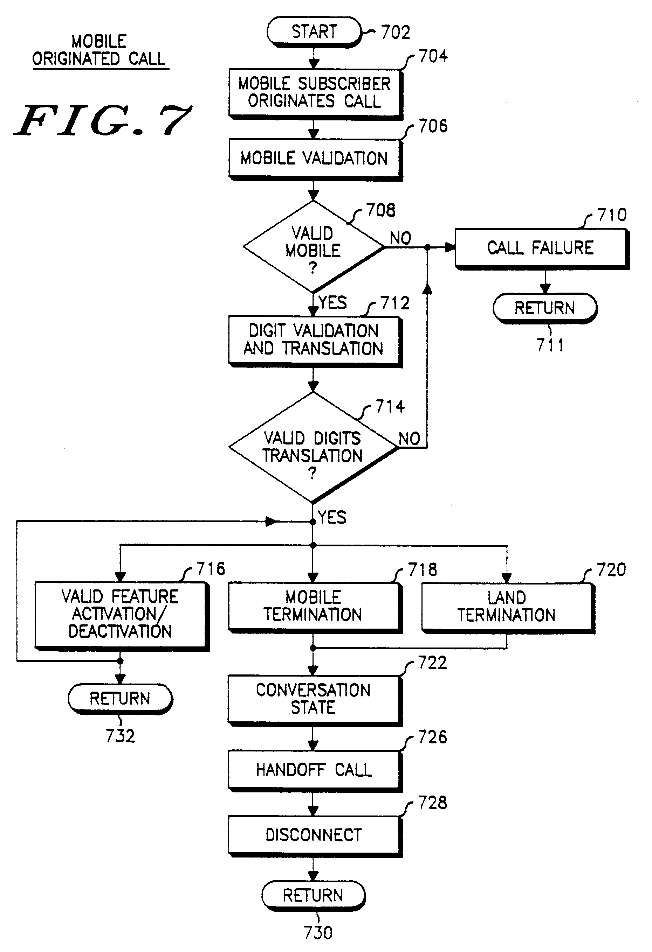

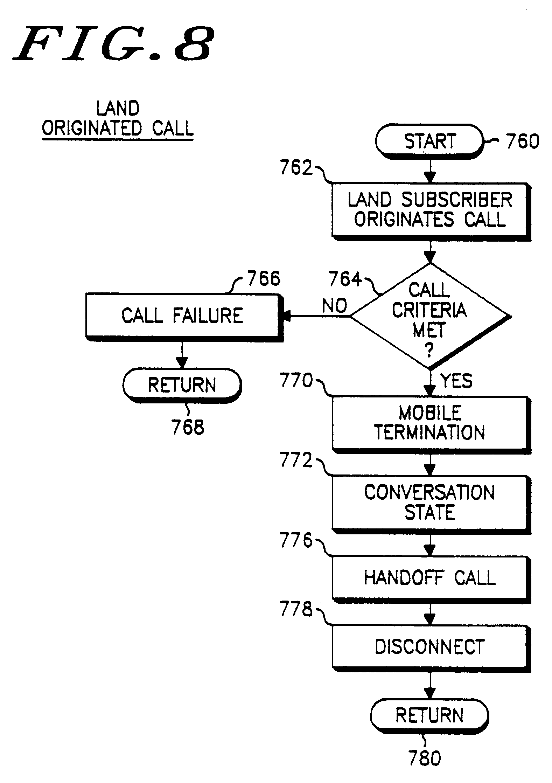

Referring to Figures 7 and 8, there are depicted the typical call flow scenarios which occur in control terminal 420 of each networked cellular system in Figure 2. Control terminal 420 executes the call processing flow diagram in Figure 7 for mobile originations and the call processing flow diagram in Figure 8 for land originations. The flow diagrams of Figures 7 and 8, together with related flow diagrams, are also shown and described in Motorola Instruction Manual No. 68P81150E06, entitled "DYNATAC Call Flow", published by Motorola Service Publications, 1301 East Algonquin Road, Schaumburg, Illinois, in 1983.

Referring to Figure 7, the call flow diagram for mobile originations is entered at block 702 and proceeds to block 704 where it is determined that a mobile has originated a call. Control terminal 420 receives the mobile identification number and the telephone number of the called party from the base site selected by the mobile. Next, at block 706, it is determined whether the mobile is a valid local mobile or a valid roaming mobile by accessing the subscriber data base 626 and/or the subscriber data base 430. In networked cellular systems, it is possible that the subscriber information for the originating mobile is not contained in the subscriber data base 626 of the control terminal that received the call. If not, the control terminal 420 will send a message to the other control terminals in the network or, if used, to centralized subscriber data base 430 to determine if the mobile is a valid mobile. This information is passed over the intersystem data lines which connect the networked cellular systems (see Figure 1). At decision block 708, a check is made to determine if the mobile has been validated. If not, NO branch is taken from decision block 708 to block 710 where call flow is diverted to the call failure process. At this point, a recorded announcement or progress tone is sent to the mobile before it is disconnected.

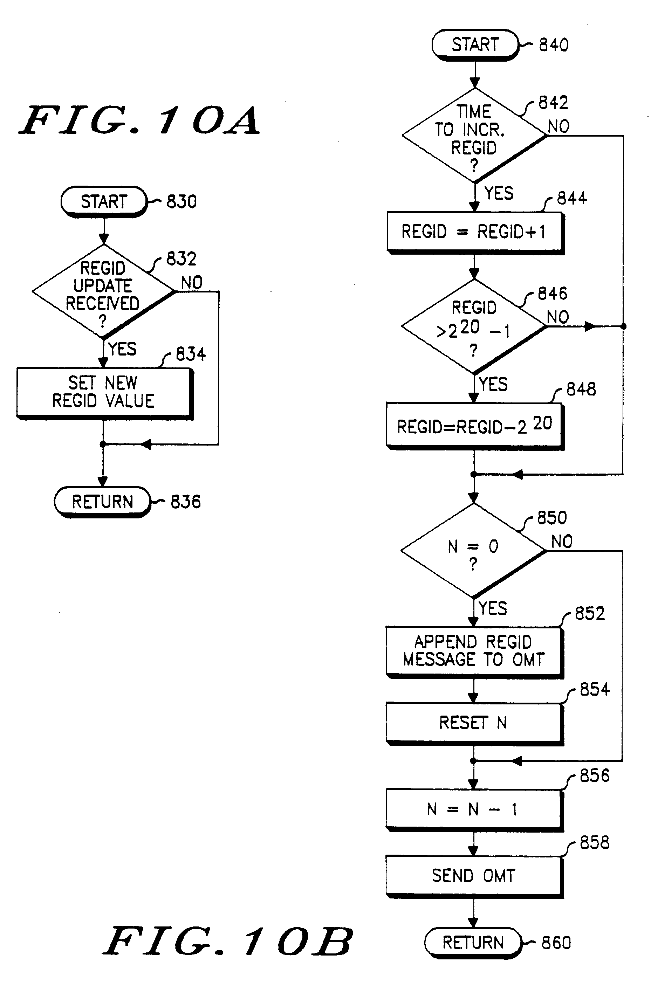

If the mobile has been validated, YES branch is taken from decision block 708 to block 712 where the digits of the telephone number of the called party are validated before they are translated according to the dialing plan. If the telephone number is not valid, NO branch is taken to block 710 where call flow is diverted to the call failure process. If the telephone number is valid, YES branch is taken to blocks 716, 718 and 720 where the mobile call is terminated to a feature valid to the mobile, a called mobile party or a called land party, respectively. Then, at block 722, the conversation state is entered when the called party answers. During conversation, a handoff may be requested by the BSC 950 processing the call. If a handoff is requested at block 726, call flow is diverted to the handoff call flow diagram in Figure 10. Otherwise, conversation continues until either the mobile party or called party terminates the call at block 728. At block 728, the call is disconnected, and thereafter, control terminal 420 returns at block 730 to processing other tasks.

Referring to Figure 8, next consider the scenario where someone on the land network is placing a call to a mobile in the networked cellular system in Figure 2. A telephone central office 422 of the public switch telephone network (PSTN) will seize a trunk to control terminal 420. Once the trunk is seized, the PSTN will send the selected cellular system 101-103 the desired mobile's telephone number. When a trunk to the control terminal 420 is seized, the land originated call flow diagram of Figure 8 is entered at block 760 and proceeds to block 762 where the digits of the telephone number of the called mobile are checked to determine if the called mobile is a valid subscriber. As explained above for a mobile originated call, the control terminal 420 accesses the subscriber data base 626 and/or the subscriber data base 430 to determine if the called mobile is a valid local mobile or a valid roaming mobile.

Next, at decision block 764, a check is made to determine if the telephone number of the called mobile has been validated. If not, NO branch is taken from decision block 764 to block 766 where call flow is diverted to the call failure process. At this point, a recorded announcement or progress tone is sent to the land party before it is disconnected.

If the mobile has been validated, YES branch is taken from decision block 764 to block 770 where the call is terminated to the called mobile. At this point, the called mobile is paged. If mobile registration information is stored in the subscriber data base 626 or the subscriber data base 430, the called mobile will be paged only in the paging area in which the called mobile is currently registered. In paging the called mobile, each control terminal 420 will signal the BSCs of the indicated paging area that a call is waiting for the mobile. All the BSCs of the indicated paging area will generate and send a paging message on the paging/access channel to the called mobile to inform the mobile that a call awaits.

Upon receiving the page, the mobile will rescan the paging/access channels group to determine which is the strongest as was described hereinabove with respect to Figures 5 and 6. This insures that the mobile will signal in on the best available access or paging/access channel. Once the strongest paging/access channel is determined, the mobile acknowledges the paging message by transmitting an acknowledgement message on the paging/access channel. The mobile's acknowledgement message is forwarded by the BSC to the control terminal 420 over the data line connecting the control terminal 420 and the BSC (see Figure 2). Note that only one BSC will return the mobile's acknowledgement message to the control terminal 420. Therefore, the control terminal 420 knows the cell in which the mobile is located.

Once the mobile has acknowledged the page, the conversation state is entered at block 772. When the mobile answers, the call proceeds as a normal telephone conversation at this point. During conversation, a handoff may be requested by the BSC 950 processing the call. If a handoff is requested at block 776, call flow is diverted to the handoff call flow diagram in the aforementioned patent application serial no. 925,427. Otherwise, conversation continues until either the mobile party or land party terminates the call at block 778. At block 778, the call is disconnected, and thereafter, control terminal 420 returns at block 780 to processing other tasks.

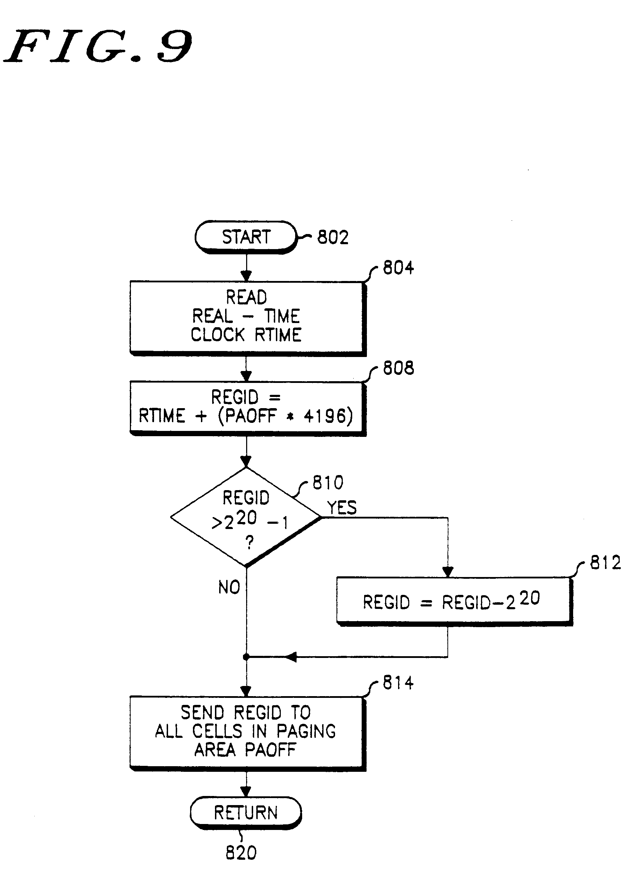

Referring to Figure 9, there is illustrated a flow diagram executed periodically by each control terminal 420 of cellular systems 101-103 in Figure 2 for updating the REGID parameter in the base sites of each of its paging areas. The registration parameters may be updated once every 24 hours to compensate for any drift in the OMT timers 951 in Figure 4, or whenever real-time clock 622 in Figure 3 is re-set. For each paging area, the process in Figure 9 for updating REGID is repeated once every 24 hours for generating its new REGID.

For a selected paging area PAOFF, the process in Figure 9 is entered at START block 802 once every 24 hours. PAOFF is an integer number between, for example, 0 and 249. Each paging area 121-136 is assigned the same SID and a different PAOFF. At block 804 the real-time clock RTIME is read. At block 808, REGID is calculated as RTIME + (PAOFF*4196). Next, at decision block 810, a check is made to determine if REGID exceeds $2^{20}$-1, i.e. 1,048,575. If so, YES branch is taken to block 812 where REGID is reduced by $2^{20}$. If not, NO branch is taken to block 814 where the new REGID 1302 is sent to the base sites in all cells of paging area PAOFF. Thereafter, control terminal 420 returns at block 820 to processing other tasks.

REGID is a 20-bit parameter that is incremented cyclically from 0 to 1,048,575. REGID 1302 in Figure 11 is included by base sites 412, 414, 416 in every Nth OMT 1300. As explained above, in order to produce a re-registration interval of approximately 24 hours, REGID is incremented by one every 21 seconds. Each base site 412, 414, 416 in Figure 4 includes an OMT timer 951 for this purpose.

Referring to Figures 10A and 10B, there are illustrated flow diagrams executed by each base site 412, 414, 416 of cellular systems 101-103 in Figure 2 for maintaining REGID at its proper value. During normal operation, the process in Figure 10A is entered at START block 830 once every second. At block 832, a check is made to determine if a new REGID has been received. IF so, YES branch is taken to block 834 to set the new value of REGID to be included in the OMT. If not, NO branch is taken to block 836 to return to other tasks.

During normal operation, the process in Figure 10B is entered at START block 840 once every second. At decision block 842, a check is made to determine if it is time to increment REGID. REGID is incremented by one every 21 seconds. If so, YES branch is taken to block 844, where REGID is incremented by one. Next, at decision block 846, a check is made to determine if REGID exceeds $2^{20}$-1, i.e. 1,048,575. If so, YES branch is taken to block 848 where REGID is reduced by $2^{20}$. If not, NO branch is taken to decision block 850 to check if N is zero. IF so, yes branch is taken to block 852 to append the REGID message 1302 to the OMT. Then, at block 856, N is reset to its initial value. Proceeding from block 856 and NO branch of decision block 850 to block 856, N is decremented by one. Next, at block 858, the OMT 1300 is sent, and thereafter the base site returns to other tasks at block 860.

The flow diagrams in Figures 5, 6, 7, 8, 9, 10A and 10B provide a detailed description of the process steps executed by the corresponding processing circuitry of the mobile 180 and cellular systems 101-103. By way of analogy to an electrical circuit diagram, these flow diagrams are equivalent to a detailed schematic for an electrical circuit where provision of the circuitry for electrical circuit blocks corresponds to provision of actual computer instructions for the flow diagram blocks. Thus, the coding of the process steps of these flow diagrams into instructions of suitable commercially available computers is a mere mechanical step for a routineer skilled in the programming art.

In summary, an improved method and apparatus for mobile registration in networked cellular systems has been illustrated and described which utilizes unique processes for automatic mobile registration throughout the network. Mobile registration automatically takes place when a mobile moves from one paging area to another.

## Claims

1. A method of registration for radiotelephones located in one or more radiotelephone systems (101-103), each radiotelephone system having a plurality of cells (402, 404, 406) for providing radiotelephone service to a corresponding geographical area, each cell having paging/access and voice channels and a radio coverage area established by fixed site radios, and each radiotelephone transmitting a registration message in response to a registration enabling message transmitted on the paging/access channels by the fixed site radios, said method comprising the steps of:

   assigning the same system identification number to all of the radiotelephone systems;

   establishing the same re-registration parameters for all of the radiotelephone systems such that the re-registration period is long relative to the mean time between call attempts for radiotelephones;

   assigning groups of cells to different paging areas (121-136);

   assigning an offset number (PAOFF) to each paging area (121-136), different from that assigned to any adjacent paging area, where offset numbers are selected from a predetermined range of numbers;

   generating a registration identification number (REGID) for each paging area derived from the corresponding assigned offset number;

   periodically transmitting on the paging/access channels by the fixed site radios in each cell a registration enabling message (OMT) containing the corresponding registration identification number for the paging area in which the cell is located; and

   transmitting (524) a registration message from a radiotelephone when the received registration identification number differs from a previously received registration number by a predetermined amount (520).

2. The method according to claim 1, further including the steps of receiving registration messages from the radiotelephones, and transmitting a paging message to a radiotelephone on the paging/access channels by the fixed site radios in the paging area in which a registration message was last received from the radiotelephone.

3. The method according to claim 1, further including the step of storing in each radiotelephone a value with a predetermined relationship to a previously received registration identification number and transmitting a registration message from the radiotelephone when the received registration identification number is greater than or equal to the stored value or is less than the stored value by a predetermined amount.

4. A method of paging radiotelephones located in one or more radiotelephone systems (101-103), each radiotelephone system having a plurality of cells (402, 404, 406) for providing radiotelephone service to a corresponding geographical area, each cell having paging/access and voice channels and a radio coverage area established by fixed site radios, and each radiotelephone transmitting a registration message in response to a registration enabling message transmitted by the fixed site radios, said method comprising the steps of:

assigning the same system identification number to all of the radiotelephone systems;

establishing the same re-registration parameters for all radiotelephone systems such that the re-registration period is long relative to the mean time between call attempts for radiotelephones;

assigning groups of cells to different paging areas (121-136);

transmitting a paging message to a radiotelephone on the paging/access channels by the fixed site radios in the paging area in which the radiotelephone last transmitted a registration message;

transmitting (238) an acknowledgement message from a radiotelephone in response to a paging message; and

directing a radiotelephone to an adjacent paging area if the radiotelephone transmits an acknowledgement message in a paging area which did not transmit the paging message.

5. The method of claim 1 wherein the same system identification number is assigned to each cell of the one or more radiotelephone systems.

6. The method according to claim 1, 4 or 5 wherein each radiotelephone registers at least once per day.

## Patentansprüche

1. Ein Verfahren zum Einbuchen für Funktelefone, die sich in einem oder mehreren Funktelefonsystemen (101-103) befinden, wobei jedes Funktelefonsystem eine Mehrzahl von Zellen (402, 404, 406) zum Bereitstellen eines Funktelefondienstes für einen entsprechenden, geographischen Bereich aufweist, jede Zelle Paging/Zugriffs- und Sprechkanäle und einen Funküberdeckungsbereich hat, der durch feste Funkstellen hergestellt wird, und wobei jedes Funktelefon eine Einbuchungsmitteilung in Antwort auf eine Einbuchungsfreigabemitteilung überträgt, die auf den Paging/Zugriffs-Kanälen von den festen Funkorten übertragen wird, wobei das Verfahren die Schritte umfaßt:

Zuordnen derselben Systemkennzahl zu allen Funktelefonsystemen;

Herstellen derselben Wiedereinbuchungsparameter für alle Funktelefonsysteme, so daß die Wiedereinbuchungsperiode lange relativ zu der Durchschnittszeit zwischen Anrufversuchen für Funktelefone ist;

Zuordnen von Gruppen von Zellen zu den unterschiedlichen Paging-Bereichen (121-136);

Zuordnen einer Versetzungszahl (PAOFF) zu jedem Paging-Bereich (121-136), die von derjenigen verschieden ist, die irgendeinem benachbarten Paging-Bereich zugeordnet ist, wobei die Versetzungszahlen aus einem vorbestimmten Zahlenbereich ausgewählt werden;

Erzeugen einer Einbuchungskennzahl (REGID) für jeden Paging-Bereich, die von der entsprechenden, zugeordneten Versetzungszahl abgeleitet wird;

Periodisches Übertragen einer Einbuchungsfreigabemitteilung (OMT) auf den Paging/Zugriffs-Kanälen von den festen Funkorten in jeder Zelle, wobei jene die entsprechende Einbuchungskennzahl für den Paging-Bereich enthält, indem sich die Zelle befindet; und

Übertragen (524) einer Einbuchungsmitteilung von einem Funktelefon, wenn sich die empfangene Einbuchungskennzahl von einer vorhergehend erhaltenen Einbuchungszahl um eine vorbestimmte Größe (520) unterscheidet.

**2.** Das Verfahren gemäß Anspruch 1, das ferner die Schritte einschließt Erhalten von Einbuchungsmitteilungen von den Funktelefonen und Übertragen einer Paging-Mitteilung zu einem Funktelefon auf den Paging/Zugriffs-Kanälen durch die festen Funkorte in dem Paging-Bereich, in dem eine Einbuchungsmitteilung zuletzt von dem Funktelefon empfangen worden war.

**3.** Das Verfahren gemäß Anspruch 1, das ferner den Schritt einschließt Speichern eines Wertes in jedem Funktelefon mit einer vorbestimmten Beziehung zu einer vorhergehend erhaltenen Einbuchungskennzahl und Übertragen einer Einbuchungsmitteilung von dem Funktelefon, wenn die erhaltene Einbuchungskennzahl größer als oder gleich dem gespeicherten Wert ist oder um eine vorbestimmte Größe kleiner als der gespeicherte Wert ist.

**4.** Ein verfahren für das Durchführen von Paging von Funktelefonen, die sich in einem oder mehreren Funktelefonsystemen (101-103) befinden, wobei jedes Funktelefonsystem eine Mehrzahl von Zellen (402, 404, 406) zum Bereitstellen eines Funktelefondienstes für einen entsprechenden, geographischen Bereich aufweist, jede Zelle Paging/Zugriffs- und Sprechkanäle und einen Funküberdeckungsbereich hat, der durch feste Funkstellen hergestellt wird, und wobei jedes Funktelefon eine Einbuchungsmitteilung in Antwort auf eine Einbuchungsfreigabemitteilung überträgt, die auf den Paging/Zugriffs-Kanälen von den festen Funkorten übertragen wird, wobei das Verfahren die Schritte umfaßt:
Zuordnen derselben Systemkennzahl zu allen Funktelefonsystemen;
Herstellen derselben Wiedereinbuchungsparameter für alle Funktelefonsysteme, so daß die Wiedereinbuchungsperiode lange relativ zu der Durchschnittszeit zwischen Anrufversuchen für Funktelefone ist;
Zuordnen von Gruppen von Zellen zu den unterschiedlichen Paging-Bereichen (121-136);
Übertragen einer Paging-Mitteilung zu einem Funktelefon auf den Paging/Zugriffs-Kanälen durch die festen Funkorte in dem Paging-Bereich, in dem das Funktelefon zuletzt eine Einbuchungsmitteilung übertrug;
Übertragen (238) einer Bestätigungsmitteilung von einem Funktelefon in Antwort auf eine Paging-Mitteilung; und
Richten eines Funktelefons zu einem benachbarten Paging-Bereich, wenn das Funktelefon eine Bestätigungsmitteilung in einem Paging-Bereich überträgt, der die Paging-Mitteilung nicht übertragen hatte.

**5.** Das Verfahren des Anspruches 1, in dem dieselbe Systemkennzahl jeder Zelle des einen oder der mehreren Funktelefonsystems/en zugeordnet wird.

**6.** Das Verfahren gemäß Anspruch 1, 4 oder 5, in dem jedes Funktelefon wenigstens einmal pro Tag einbucht.

**Revendications**

**1.** Procédé d'enregistrement pour radiotéléphones se trouvant dans un ou plusieurs systèmes radiotéléphoniques (101-105), chaque système radiotéléphonique ayant une pluralité de cellules (402, 404, 406) servant à fournir un service radiotéléphonique à une zone géographique correspondante, chaque cellule ayant des voies de recherche/accès et de transmission de signaux vocaux et une zone de couverture radio établie par des radios de site fixe, et chaque radiotéléphone émettant un message d'enregistrement en réponse à un message de validation d'enregistrement émis sur les voies de recherche/accès par les radios de site fixe, ledit procédé comprenant les opérations suivantes :
affecter le même numéro d'identification à tous les systèmes radiotéléphoniques ;
établir les mêmes paramètres de réenregistrement pour tous les systèmes radiotéléphoniques de façon que la période de réenregistrement soit longue par rapport au temps moyen entre tentatives d'appel des radiotéléphones ;
affecter des groupes de cellules à des zones de recherche différentes (121-136) ;
affecter un numéro décalé (PAOFF) à chaque zone de recherche (121-136), différent de celui affecté à l'une quelconque des zones de recherche adjacentes, où les numéros décalés sont sélectionnés dans un ensemble prédéterminé de nombres ;
produire un numéro d'identification d'enregistrement (REGID) pour chaque zone de recherche à partir du numéro décalé affecté correspondant ;
faire que soit périodiquement émis sur les voies de recherche/accès, par les radios de site fixe de chaque cellule, un message de validation d'enregistrement (OMT) contenant le numéro d'identification d'enregistrement correspondant de la zone de recherche dans laquelle la cellule est placée ; et
faire émettre (524) un message d'enregistrement en provenance d'un radiotéléphone lorsque le numéro d'identification d'enregistrement reçu diffère, d'une quantité prédéterminée (520), d'un numéro d'enregistrement précédemment reçu.

2. Procédé selon la revendication 1, comportant en outre les opérations qui consistent à recevoir des messages d'enregistrement de la part des radiotéléphones et à faire émettre un message de recherche destiné à un radiotéléphone sur les voies de recherche/accès par les radions de site fixe de la zone de recherche dans laquelle un message d'enregistrement a été reçu en dernier de la part du radiotéléphone.

3. Procédé selon la revendication 1, comportant en outre l'opération qui consiste à mémoriser dans chaque radiotéléphone une valeur ayant une relation prédéterminée avec un numéro d'identification d'enregistrement précédemment reçu et faire émettre un message d'enregistrement en provenance du radiotéléphone lorsque le numéro d'identification d'enregistrement reçu est supérieur ou égal à la valeur mémorisée, ou bien est inférieur à la valeur mémorisée, d'une quantité prédéterminée.

4. Procédé de recherche de radiotéléphones se trouvant dans un ou plusieurs systèmes radiotéléphoniques (101-103) chaque système radiotéléphonique ayant une pluralité de cellules (402, 404, 406) servant à fournir un service radiotéléphonique à une zone géographique correspondante, chaque cellule ayant des voies de recherche/accès et de transmission de signaux vocaux et une zone de couverture radio établie par des radios de site fixe, et chaque radiotéléphone émettant un message d'enregistrement en réponse à un message de validation d'enregistrement émis par les radios de site fixe, ledit procédé comprenant les opérations suivantes :

faire émettre un message de recherche destiné à un radiotéléphone sur les voies de recherche/accès par les radios de site fixe de la zone de recherche dans laquelle le radiotéléphone a émis pour la dernière fois un message

affecter le même numéro d'identification à tous les systèmes radiotéléphoniques ;

établir les mêmes paramètres de réenregistrement pour tous les systèmes radiotéléphoniques de façon que la période de réenregistrement soit longue par rapport au temps moyen entre tentatives d'appel des radiotéléphones ;

affecter des groupes de cellules à des zones de recherche différentes (121-136) ;

ge d'enregistrement ;

faire émettre (238) un message d'accusé de réception par un radiotéléphone en réponse à un message de recherche ; et

diriger un radiotéléphone sur une zone de recherche adjacente si le radiotéléphone émet un message d'accusé réception dans une zone de recherche qui n'a pas émis le message de recherche.

5. Procédé selon la revendication 1, où le même numéro d'identification de système est affecté à chaque cellule du ou des systèmes radiotéléphoniques.

6. Procédé selon la revendication 1, 4 ou 5, où chaque radiotéléphone s'enregistre au moins une fois par jour.

**FIG. 1**

FIG.2

NETWORKED CELLULAR SYSTEMS

SUBSCRIBER DATA BASE

BASE SITE CONTROLLERS

420

620 MODEMS

618 COMMUNICATIONS INTERFACE

622 REAL TIME CLOCK

602 CENTRAL PROCESSOR

604 SWITCH CONTROL UNIT AND SWITCH

606 GROUP MULTIPLEXER UNIT

612 TONE SIGNALLING UNIT

614 MAINTENANCE AND STATUS UNIT

616 DATA ACQUISITION SUBSYSTEM

624 CELL DATA

626 SUBSCRIBER DATA

608 VOICE GROUP UNIT

609 VOICE GROUP UNIT

610 VOICE GROUP UNIT

TELEPHONE TRUNKS
NETWORK LINES
BASE STATION LINES

# FIG. 3

17

FIG.4

EP 0 309 572 B1

# FIG.5A

# FIG.5B

## FIG. 6A

224

START — 502

SCAN SIGNALLING CHANNELS — 504

SELECT CHANNEL HAVING THE STRONGEST SIGNAL STRENGTH — 506

READ OVERHEAD WORDS — 508

SET REGISTRATION STATUS — 510

REGINCR ? — 512

STORE NEW REGINCR — 514 ← YES

NO

REGID ? — 516

NO →

YES

REG STATUS ENABLED ? — 517

NO → RETURN — 526

YES

IS SID A CURRENT ENTRY ? — 518

NO →

YES

REGID ≥ NXTREG ? — 520

YES →

NO

A

B

C

*FIG.6B*

MOBILE
ORIGINATED CALL

*FIG. 7*

START — 702

MOBILE SUBSCRIBER
ORIGINATES CALL — 704

MOBILE VALIDATION — 706

VALID
MOBILE
? — 708

NO → CALL FAILURE — 710

RETURN — 711

YES

DIGIT VALIDATION
AND TRANSLATION — 712

VALID DIGITS
TRANSLATION
? — 714

NO

YES

VALID FEATURE
ACTIVATION/
DEACTIVATION — 716

MOBILE
TERMINATION — 718

LAND
TERMINATION — 720

RETURN — 732

CONVERSATION
STATE — 722

HANDOFF CALL — 726

DISCONNECT — 728

RETURN — 730

# FIG.8

LAND
ORIGINATED CALL

START — 760

762 — LAND SUBSCRIBER
ORIGINATES CALL

766 — CALL FAILURE

764 — CALL CRITERIA MET ?

NO

RETURN

768

770 — MOBILE TERMINATION

YES

772 — CONVERSATION STATE

776 — HANDOFF CALL

778 — DISCONNECT

RETURN

780

24

# FIG.9

START — 802

READ
REAL − TIME
CLOCK RTIME — 804

REGID =
RTIME + (PAOFF * 4196) — 808

REGID
$> 2^{20} - 1$
? — 810

YES

NO

REGID = REGID$-2^{20}$ — 812

SEND REGID TO
ALL CELLS IN PAGING
AREA PAOFF — 814

RETURN

820

25

# FIG. 10A

START — 830

REGID UPDATE RECEIVED ? — 832 → NO

↓ YES

SET NEW REGID VALUE — 834

RETURN — 836

# FIG. 10B

START — 840

TIME TO INCR. REGID ? — 842 → NO

↓ YES

REGID = REGID+1 — 844

REGID > $2^{20} - 1$ ? — 846 → NO

↓ YES

REGID = REGID $- 2^{20}$ — 848

N = 0 ? — 850 → NO

↓ YES

APPEND REGID MESSAGE TO OMT — 852

RESET N — 854

N = N − 1 — 856

SEND OMT — 858

RETURN — 860

## 1300 OVERHEAD MESSAGE TRAIN

*FIG. 11*

1301 ─ | SID(15) REGH(1) REGR(1) |

1302 ─ | REGID (20) |

1303 ─ | REGINCR (12) |

*FIG. 12*

| 1400 MEMORY | |
|---|---|
| SIDH | REGINCR |
| | |
| SID1 | NXTREG1 |
| SID2 | NXTREG2 |
| SID3 | NXTREG3 |
| SID4 | NXTREG4 |

1419 ─ SIDH / REGINCR
1420 ─ SID1 / NXTREG1
1421 ─ SID2 / NXTREG2
1422 ─ SID3 / NXTREG3
1423 ─ SID4 / NXTREG4

*FIG. 13*

## 1500 DIRECTED RETRY MESSAGE

| CH1, CH2, CH3 | CH4, CH5, CH6 |
|---|---|

1501          1502